# EUROPEAN PATENT APPLICATION

(11) **EP 4 718 033 A1**
(43) Date of publication of application: **01.04.2026**
(21) Application number: 24192637.7
(22) Date of filing: 02.08.2024
(51) Int. Cl.: G01C 25/00, G05B 17/00, G01C 19/00, G01P 15/00

(54) **INERTIAL SENSOR UNIT, INERTIAL SENSOR, METHOD OF OPERATING AN INERTIAL SENSOR UNIT, TEST METHOD FOR TESTING PROPER OPERATION OF AN INERTIAL SENSOR, CONTROLLER, HARDWARE-IN-THE-LOOP TEST SYSTEM, AND VEHICLE**

(71) Applicant: Lilium GmbH, 82131 Gauting (DE)
(72) Inventor: APOSTOLYUK, Vladislav, 82131 Gauting (DE)
(74) Representative: Ter Meer Steinmeister & Partner

(57) **Abstract**

An inertial sensor unit (1, 1a, 1b, 1c) comprising: an inertial sensor (2, 2a, 2b, 2c), for detecting an inertial quantity (a₀, Ω₀), in particular acceleration and/or an angular rate, the inertial sensor having a sensitive unit (21, 21b) for sensing the inertial quantity (a₀, Ω₀) and a signal processing unit (22, 22b, 22c) being configured to process an output of the sensitive element and to output a signal (a, Ω) related to the sensed inertial quantity; and a virtual inertial quantity input unit (3, 3b, 3c) which is configured to input a virtual inertial quantity (a*, Ω*) to the inertial sensor (2, 2a, 2b, 2c, 2d). In order to improve hardware-in-the-loop suitability, the signal processing unit (2, 2a, 2b, 2c, 2d) is configured to output the signal based on the virtual inertial quantity (a*, Ω*) input by the virtual inertial quantity input unit (3, 3b, 3c).

## Description

The present invention relates to an inertial sensor unit, in particular, an inertial sensor unit comprising an inertial sensor for detecting an inertial quantity, and also relates to an inertial sensor for such an inertial sensor unit. Furthermore, the invention relates to a method of operating an inertial sensor unit, a test method for testing proper operation of an inertial sensor, a controller, a hardware-in-the-loop test system, and a movable vehicle.

Vehicles such as aerial vehicles are known to be controlled using measured information about its motion which is provided by inertial sensors.

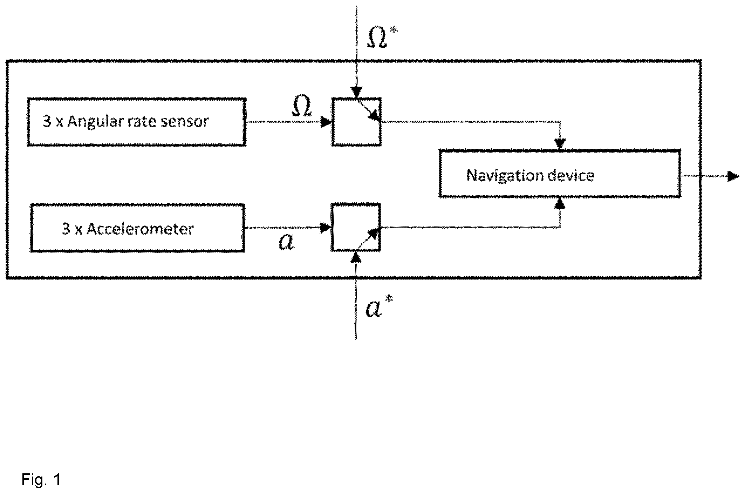

Fig. 1 shows a hardware-in-the-loop test system according to the state of the art. In order to test a navigation device for controlling motion of the vehicle, measured sensor outputs are input to the navigation device. For example, in Fig. 1, there are provided two types of inertial sensors, an accelerometer and an angular rate sensor. For each type of sensor, there are usually provided three in the vehicle, one for each of the three spatial axes. The accelerometers detect a translational acceleration a, while the angular rate sensors detect an angular rate Ω. However, when it comes to hardware-in-the-loop testing of the navigation device, the real inertial sensors are cut-off or bypassed. That is, the aforementioned measured outputs a*, Ω* are input to the navigation device in order to test the navigation device. The measured outputs are virtual and do not represent the real inertial sensor output. They can be obtained from simulations or previous testing.

Hence, the sensor behaviour may not be appropriately reflected for such hardware-in-the-loop testing.

It is thus the object of the present invention to provide an improved inertial sensor unit which allows for improved hardware-in-the-loop testing.

This object is achieved by an inertial sensor unit having the features of claim 1.

According to a first aspect, there is provided an inertial sensor unit comprising: an inertial sensor for detecting an inertial quantity, in particular acceleration and/or an angular rate, the inertial sensor having a sensitive element for sensing the inertial quantity and a signal processing unit being configured to to process an output of the sensitive element (21, 21b) and to output a signal related to the sensed inertial quantity; and a virtual inertial quantity input unit which is configured to input a virtual inertial quantity to the inertial sensor, wherein the signal processing unit is configured to output the signal based on the virtual inertial quantity input by the virtual inertial quantity input unit.

According to the present invention, there is provided the virtual inertial quantity input unit which feeds an inertial quantity to the inertial sensor. Hence, contrary to the prior art, the signal which is input to the controller for hardware-in-the-loop (hereinafter, also HIL) testing can be a real sensor output signal, in particular, a signal output by the signal processing unit of the inertial sensor, but not a mere virtual signal. Thus, the sensor behaviour can be appropriately reflected. In particular, the output signal of the inertial sensor may have a portion associated with internal sensor noise which can thus appropriately reflected. As a result, the interaction between real inertial sensor and controller can be appropriately tested.

Also, the inertial sensor must not be moved to provide its output. The signal can be output with the sensor being stationary.

It is to be noted that the inertial sensor comprises a signal processing unit which processes an output of the sensitive element and outputs a signal related to the inertial quantity sensed by the sensitive element, that is a signal defining the inertial quantity detected by the sensor. In other words, the signal processing unit is configured to receive a signal related to a characteristic quantity of the sensitive element and convert it into the output signal of the inertial sensor. The signal processing unit may comprise an analogous-digital conversion unit. The signal processing unit may output an electric signal.

The signal processing unit may also comprise an electronic processor.

It is to be noted that the sensitive element need not necessarily be a single physic element, but may comprise a plurality of physic elements. The sensitive element may output an electric signal to the signal processing unit. The signal output by the sensitive element, in particular, the electric signal, may be correlated to the characteristic quantity of the sensitive element.

For example, the sensitive element may comprise a Piezo-electric element. It may also comprise a pressure sensitive membrane and a measuring element measuring a deformation of the membrane.

The characteristic quantity of the sensitive element may be a quantity which produces a direct effect on the sensitive element and can accordingly be represented in a signal, in particular, an electric signal.

The virtual inertial quantity may be input upstream of the signal processing unit.

An inertial quantity according to the present invention means, in particular, any quantity which is related directly or indirectly to an inertial load. It may be a kinematic quantity such as translational acceleration, speed, or position, as well as angular acceleration, speed (rate), or position, or a kinetic quantity such as a moment or force.

According to a further aspect, the inertial sensor may be an accelerometer for detecting acceleration.

Thus, acceleration, in particular, translational acceleration can be reliably detected, and an appropriate signal reflecting the inertial quantity can be generated. A virtual acceleration can be easily input to the inertial sensor. In an accelerometer, an inertial force may be the characteristic quantity of the sensitive element which may be converted into the output signal by the signal processing unit. A navigation device for controlling movement of a movable vehicle can be reliably HIL tested based on acceleration signals.

Alternatively, the inertial sensor may be an angular rate sensor, preferably based on Coriolis effect, for detecting an angular rate. Thus, a controller for controlling movement of a vehicle can be reliably HIL tested in view of angular rate signals.

According to this aspect, an angular rate can be reliably detected. It is possible to input a virtual angular rate in order to obtain an appropriate output signal therefor. Based on the Coriolis effect, a Coriolis force can be the characteristic quantity of the sensitive element, which allows for easy detection of the angular rate.

In particular, the sensitive element may have an actuated oscillator configured to perform actuated oscillations along a first axis and a sensing oscillator configured to perform reactional oscillations along a second axis different from the first axis in response to an angular rate to be detected, and wherein the signal processing unit may be configured to output the signal based on demodulation of the reactional oscillations using the actuated oscillations.

Hence, the Coriolis force may occur on the sensing oscillator generating Coriolis induced oscillations based on an angular rate being the inertial quantity to be detected. The reactional oscillations can be acquired and, based on the actuated oscillations, the reactional oscillations can be converted into the detected angular rate by means of the signal processing unit. In such an inertial sensor unit, the virtual inertial quantity, in particular a virtual angular rate, may be input to the sensitive element.

According to still another aspect, the inertial sensor may be a closed-loop inertial sensor having a sensor actuator for actuating the sensitive element.

According thereto, the inertial sensor may be a regulated sensor in which the output signal may be modified appropriately by applying a control input in form of an actuation load of the sensor actuator. Thus, noise of the inertial sensor can be reduced. An inertial sensor unit having such an inertial sensor is particular advantageous for HIL testing.

Preferably, the sensor actuator is configured to actuate the sensitive element based on the virtual inertial quantity input by the virtual inertial quantity input unit.

Thus, the virtual inertial quantity can be input upstream of at least part of the sensitive element, in particular to a virtual inertial quantity receiving unit of the inertial sensor which converts the virtual input quantity into an actuation load applied by the sensor actuator. Thus, the entire sensor behaviour including the sensitive element and signal processing unit may be reflected in testing.

For example, in the closed-loop inertial sensor being based on the Coriolis effect, a sensor actuator may be provided to actuate the sensing oscillator. Hence, demodulation of the reactional oscillations with the actuated oscillations can be appropriately reflected in testing.

According to still another aspect, the inertial sensor may be an open-loop inertial sensor.

Even for such a sensor type, the sensor behaviour can be reflected for testing. In particular, the behaviour of the signal processing unit may be appropriately reflected.

Preferably, the inertial sensor unit may further comprise a virtual model unit having a virtual model of the sensitive element and being configured to output a virtual sensed quantity based on the virtual inertial quantity input by the virtual inertial quantity input unit.

According thereto, the behaviour of the sensitive element can be appropriately reflected even for an open-loop inertial sensor. The signal processing unit may receive the virtual sensed quantity such that the behaviour of the signal processing unit may be appropriately reflected.

The virtual model may be a dynamic model, in particular modelling a spring-damper arrangement.

Preferably, the virtual model unit is provided in parallel to the sensitive element.

Thus, the behaviour of the sensitive element and the interaction thereof with the signal processing unit can still be appropriately reflected in testing. In particular, noise of the inertial sensor caused by the sensitive element and/or the signal processing unit may be reflected. For example, the inertial sensor may be stationary, but operated with a zero input such that still the noise can be obtained, while a carrier signal reflecting the inertial quantity to be detected may be generated based on the virtual sensed quantity.

Another aspect of the present invention is directed to an inertial sensor for an inertial sensor unit according to at least one of the previous aspects having a virtual inertial quantity receiving unit for receiving a virtual inertial quantity.

Hence, such an inertial sensor can be used to achieve the aforementioned effects. The virtual inertial quantity receiving unit may be configured to convert the virtual inertial quantity into a corresponding actuation load applied by the sensor actuator.

Still another aspect of the present invention concerns a method of operating an inertial sensor unit according to at least one of the previous aspects, wherein the inertial sensor is stationary.

Hence, HIL testing of a navigation device for controlling movement of a movable vehicle can be further facilitated as the inertial sensor unit, in particular the inertial sensor, need not be moved. The term "operating" means that the inertial sensor unit is connected to power and is operated with a zero input. An inertial quantity may be input to the inertial sensor via the virtual inertial quantity input unit.

Still another aspect of the invention concerns a test method for testing proper operation of an inertial sensor, wherein the method comprises: operating the inertial sensor unit according to at least one of the above aspects with a predetermined virtual inertial quantity, wherein proper operation of an inertial sensor is determined based on a comparison of the signal output by the inertial sensor unit and a predetermined output for the predetermined virtual inertial quantity.

Thus, proper operation of an inertial sensor can be checked. In particular, this method is suitable if the inertial sensor is a closed-loop sensor. Then, the predetermined virtual inertial quantity may be converted into an actuation load applied by the sensor actuator. The sensed inertial quantity results in an output signal which can be compared against the predetermined output corresponding to the predetermined virtual inertial quantity. In particular, the inertial sensor unit may be stationary for this method.

A further aspect concerns a controller configured to perform the test method just described above.

Hence, the test method can be reliably performed when the controller runs the test method implemented thereon.

According to the present disclosure, a controller may be any electronic device having a processor, which can carry out a program and provide input to a certain device.

Still a further aspect concerns a Hardware-in-the-loop test system, comprising: the inertial sensor unit according to at least one of the above aspects; and a navigation device being configured to receive the signal output by the inertial sensor unit.

Thus, proper operation of the navigation device which is configured to control movement of a movable vehicle can be checked based on appropriate sensor output signals. The HIL test system may be operated such that the inertial sensor unit is stationary. The navigation device may be coupled to at least one vehicle actuator such as a propulsion unit and/or a flight control surface.

According to the present disclosure, a navigation device may be an electronic device having a processor for carrying out a navigation algorithm.

Still another aspect concern a movable vehicle, in particular an aerial vehicle, a road vehicle or a railway vehicle, comprising: the inertial sensor as described above, preferably, the inertial sensor unit according to at least one of the aspects described above, more preferably the hardware-in-the-loop test system as just described.

Thus, for a vehicle having such an inertial sensor appropriate HIL testing can be performed.

The aforementioned aspects will be described in detail in the following description by making reference to the accompanying drawings.
Fig. 1 shows a block diagram of a HIL test system according to the prior art.
Fig. 2 shows a block diagram of an accelerometer.
Fig. 3 shows a block diagram of an inertial sensor unit having a closed-loop accelerometer according to the invention.
Fig. 4 shows a block diagram of an inertial sensor unit having an open-loop accelerometer according to the invention.
Fig. 5 shows a block diagram of a Coriolis vibratory gyroscope (CVG).
Fig. 6 shows a block diagram of an inertial sensor unit having a closed-loop CVG according to the invention.
Fig. 7 shows a block diagram of an inertial sensor unit having an open-loop CVG according to the invention.

Fig. 1 has been described as prior art.

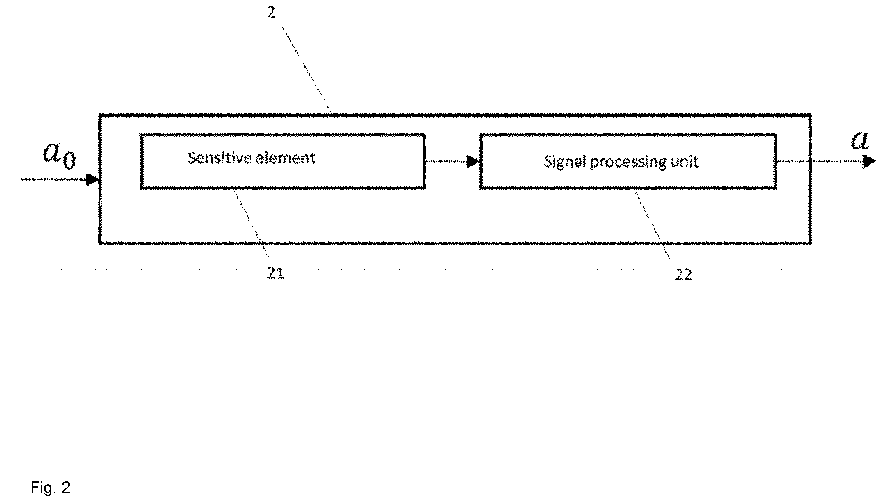

Fig. 2 shows the structure of an accelerometer 2 which is configured to receive an inertial quantity as an input a₀, here in the form of a translational acceleration. A sensitive element 21 is configured to sense the inertial quantity a₀. Furthermore, a signal processing unit 22 is configured to convert the inertial quantity a₀ sensed by the sensitive element 21 into an output signal a corresponding to the inertial quantity a₀ being input. The output signal a may be a signal having a digital carrier signal representing the inertial quantity a₀. To this end, the signal processing unit may comprise an analogous-digital conversion unit which is configured to process an output of the sensitive element 21 and output a signal related to the inertial quantity sensed by the sensitive element 21. The sensitive element 21 may output a signal related to an inertial force or a quantity related thereto such as strains exhibited by the sensitive element due to the inertial quantity, which defines the inertial quantity. For example, the sensitive element 21 may comprise or be a Piezo-electric element.

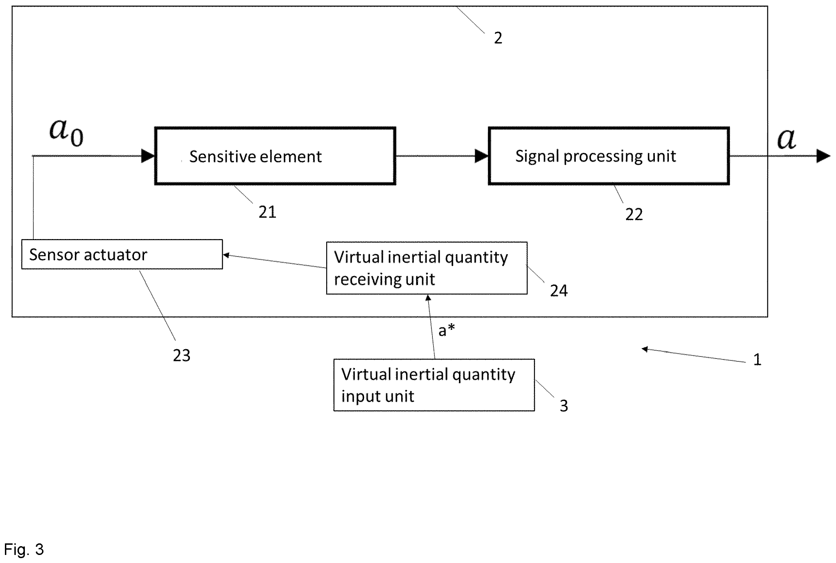

According to the invention, there is provided an inertial sensor unit 1 as shown in Fig. 3. The inertial sensor unit 1 has the accelerometer 2. In addition to the sensitive element 21 and the signal processing unit 22, as shown in Fig. 2, the accelerometer 2 has a sensor actuator 23 which is configured to actuate the sensitive element 21. Thus, the accelerometer 2 is a closed-loop inertial sensor.

Furthermore, the inertial sensor unit 1 has a virtual inertial quantity input unit 3 which provides a virtual inertial quantity a* to the inertial sensor 2. The inertial sensor 2 has a virtual inertial quantity receiving unit 24 which communicates with virtual inertial quantity input unit 3.

A virtual inertial quantity input can be converted by the virtual inertial quantity receiving unit 24 into an actuation load applied by the sensor actuator. In other words, the actuation load corresponds to a real inertial quantity a₀ applied to the sensitive element 21 which may be equal to value of the virtual inertial quantity a*.

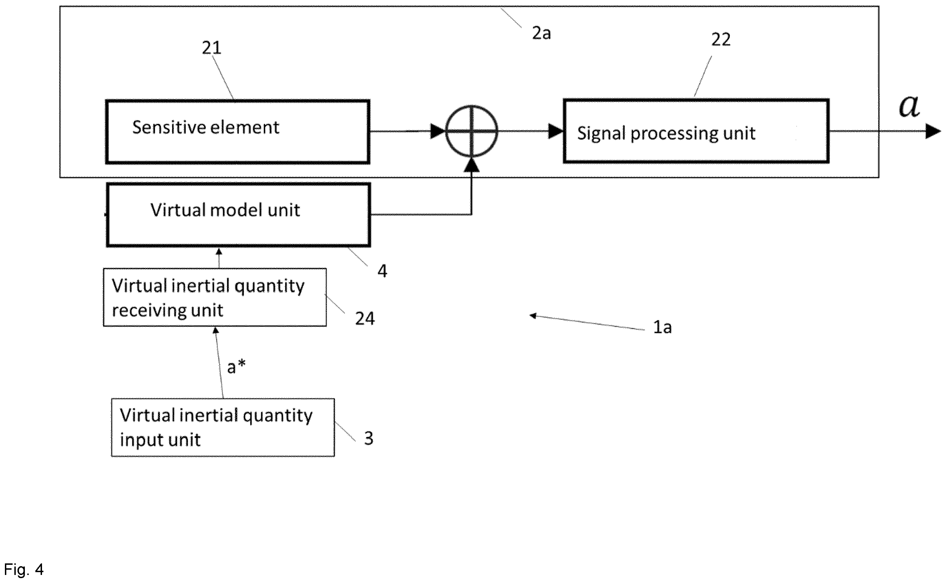

In case the accelerometer is an open-loop inertial sensor 2a, as shown in Fig. 4, there is not provided a sensor actuator.

The inertial sensor unit 1a also has the virtual inertial quantity input unit 3 and the receiving unit 24. Furthermore, there is provided a virtual model unit 4. The virtual model unit 4 can comprise a storage having a virtual model of the sensitive element stored thereon. Furthermore, the virtual model unit 4 has a processor which can carry out calculation of the virtual model. The virtual model may be a dynamic spring-damper model of the sensitive element which determines a virtual sensed quantity based on the virtual inertial quantity a*.

The virtual model unit 4 is provided in parallel to the sensitive element 21, and their respective outputs a fed into the signal processing unit 22 of the accelerometer. It is to be noted that the virtual model unit 4 may be part of the accelerometer or only of the inertial sensor unit 1a.

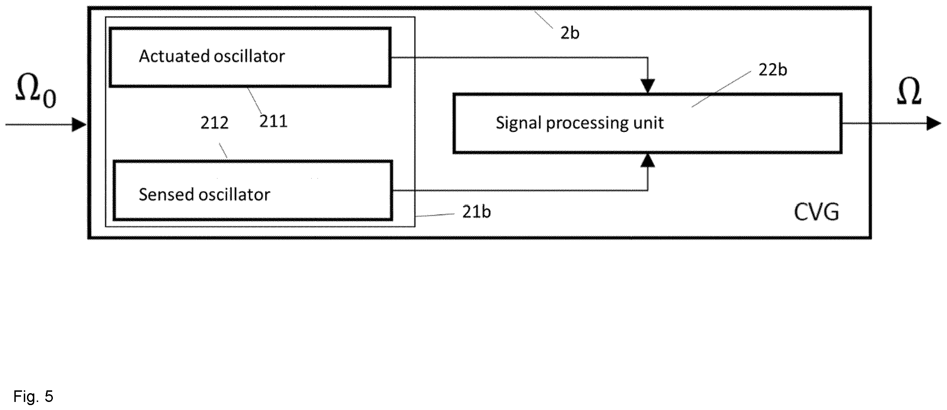

Fig. 5 shows the configuration of a Coriolis vibratory gyroscope (CVG) 2b being an angular rate sensor based on the Coriolis effect.

This CVG 2b includes a sensitive element 21b. The sensitive element 21b includes an actuated oscillator 211 and a sensing oscillator 212. The actuated oscillator 211 performs actuated oscillations upon actuation by an actuator sensor along a first axis. Furthermore, the sensing oscillator 212 is configured to perform reactional oscillations along a second axis in response to an external inertial quantity Ω₀ being an angular rate to be detected. For example, the oscillators may each include a spring-damper arrangement allowing the oscillations along the respective axes. The first and second axes may be perpendicular to each other, but at least different from each other. They are preferably orthogonal to an axis of the angular rate to be detected.

A respective signal related to each of the actuated oscillations and reactional oscillations can be received by the signal processing unit 22b. Thus, the reactional oscillations can be demodulated with the actuated oscillations in order to generate an output signal Ω related to the external angular rate.

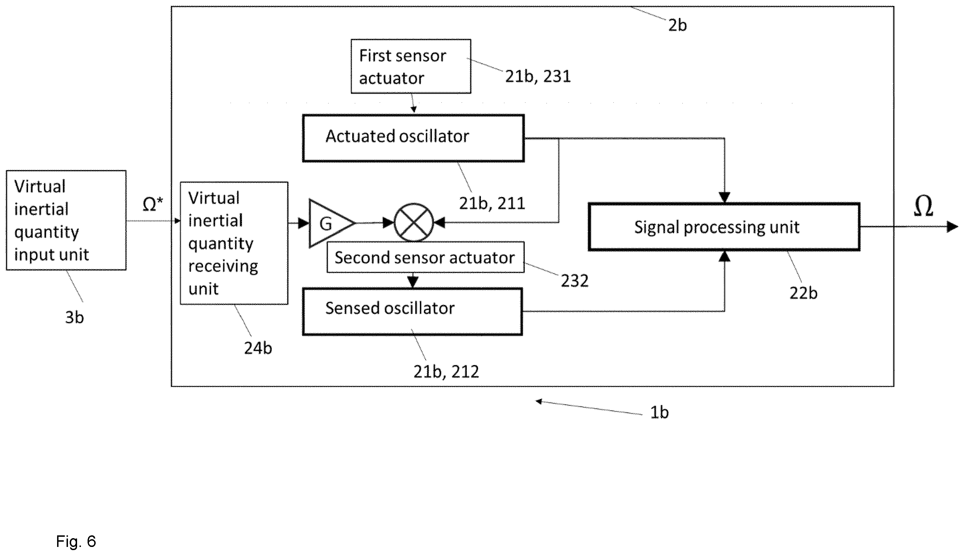

In Fig. 6, a closed-loop CVG is shown as part of an inertial sensor unit 1b.

A first sensor actuator 231 is provided to operate the actuated oscillator. A second sensor actuator 232 corresponding to the sensor actuator according to the claims is configured to provide an actuator load to the sensing oscillator 212, for example, in order to reduce noise of the CVG.

The inertial sensor unit 1b further has a virtual inertial quantity input unit 3b which is configured to input a virtual angular rate Ω* as virtual inertial quantity. Furthermore, a virtual inertial quantity receiving unit 24b is provided which receives the virtual angular rate Ω*. The virtual inertial quantity receiving unit 24 converts the virtual angular rate into an actuation load applied by the second sensor actuator 232 based on a proportional constant G to be multiplied with the virtual angular rate Ω* and based on the actuated oscillations. That is, the virtual angular rate Ω* multiplied by the constant G and modulated with the actuated oscillations determines the actuator load.

Then, the signal processing unit 22b can generate the output signal Ω.

It is to be noted that the power source for the first sensor actuator 231 and the second sensor actuator 232 may be the same, for example, an internal DC source such as a battery or an external AC source.

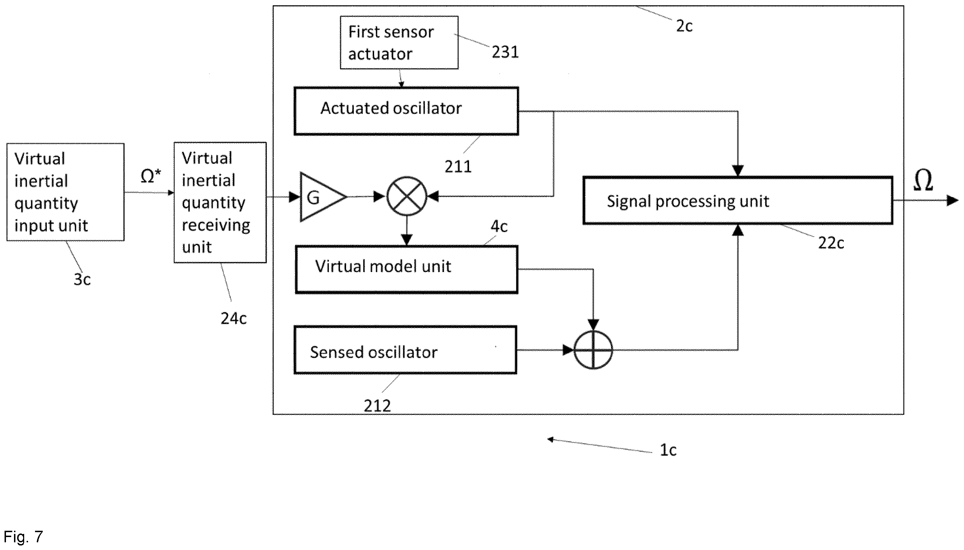

In Fig. 7, the configuration for an open-loop CVG as part of an inertial sensor unit 1c is shown. Such a CVG 2c only has the first sensor actuator 231, but not the second sensor actuator 232. In similar way, there is provided a virtual inertial quantity input unit 3c and a virtual inertial quantity receiving unit 24c.

Furthermore, there is provided a virtual model unit 4c which is provided in parallel to the sensing oscillator 212, and thus parallel to at least part of the sensitive element.

Here, the virtual model unit 4c can be structured similar to the one of Fig. 4, but has a dynamic model of the sensing oscillator. Here, the virtual model unit 4c is provided within the inertial sensor 2c, but maybe provided outside thereof. The virtual model receives as input the virtual angular rate Ω* multiplied by the proportional constant G and modulated with the actuated oscillations, resulting in an input excitation for the virtual dynamic model. Based on the input, a virtual sensed quantity is determined by the virtual model which is input to the signal processing unit 22c together with the output (a signal related to a characteristic quantity) of the sensing oscillator) and the actuated oscillations.

Then, the signal processing unit 22c may demodulate the virtual sensed quantity (oscillations) and the sensed oscillations of the sensing oscillator with the actuated oscillations.

By means of each of the inertial sensor units 1 to 1c, the inertial sensor (accelerometer or angular rate sensor) can produce an output signal which is suitable for HIL testing, while the inertial sensor unit, in particular the inertial sensor itself, can be stationary. The virtual inertial quantity can be determined based on simulation or can be measured during previous movement of the associated vehicle.

Hence, it is possible to provide HIL testing for a navigation device for controlling movement of a movable vehicle in an improved manner.

The inertial sensor unit can be operated by connecting the inertial sensor unit, in particular inertial sensor, to power while the inertial sensor receives a zero input, that is, only supply power but is not subject to external real motions.

For the closed-loop inertial sensors, it can also be determined if the inertial sensor is operating properly. For example, the inertial sensor unit, in particular, the virtual inertial quantity input unit may input a predetermined virtual inertial quantity to the inertial sensor, that is to its the virtual inertial quantity receiving unit. Such a predetermined virtual inertial quantity is associated with a predetermined output to be generated by the inertial sensor. Hence, if the predetermined output corresponds within a certain tolerance to the real signal output by the inertial sensor, it can be determined that the inertial sensor operated properly. Otherwise, malfunction can be determined.

A HIL test system comprises additionally a navigation device for controlling movement of an associated movable vehicle.

The movable vehicle being equipped with the inertial sensor, the inertial sensor unit, and/or a HIL test system may be any kind of a road, rail, water, or aerial vehicle.

The aerial vehicle may be a VTOL aerial vehicle, which may be electrically driven.

The movable vehicle may only have the inertial sensor and the navigation device for controlling movement thereof. The other parts of the inertial sensor unit such as virtual inertial quantity input unit can be provided separately in the HIL test system.

The virtual model unit may be part of the inertial sensor, in particular, provided to the same physical unit, or may be externally connected to the inertial sensor. In the latter case, the inertial sensor has preferably a virtual sensed quantity receiving unit.

## Claims

1. An inertial sensor unit (1, 1a, 1b, 1c) comprising:
an inertial sensor (2, 2a, 2b, 2c), for detecting an inertial quantity (a₀, Ω₀), in particular acceleration and/or an angular rate, the inertial sensor having a sensitive element (21, 21b) for sensing the inertial quantity (a₀, Ω₀ and a signal processing unit (22, 22b, 22c) being configured to process an output of the sensitive element (21, 21b) and to output a signal (a, Ω) related to the sensed inertial quantity; and
a virtual inertial quantity input unit (3, 3b, 3c) which is configured to input a virtual inertial quantity (a*, Ω*) to the inertial sensor (2, 2a, 2b, 2c, 2d), in particular upstream of the signal processing unit (22, 22b, 22c), wherein
the signal processing unit (22, 22b, 22c) is configured to output the signal based on the virtual inertial quantity (a*, Ω*) input by the virtual inertial quantity input unit (3, 3b, 3c).

2. The inertial sensor unit (1, 1a) according to claim 1, wherein the inertial sensor (2, 2a) is an accelerometer for detecting acceleration (a₀).

3. The inertial sensor unit (1b, 1c) according to claim 1, wherein the inertial sensor (2b, 2c) is an angular rate sensor, preferably based on Coriolis effect, for detecting an angular rate (Ω₀).

4. The inertial sensor unit (1b, 1c) according to claim 3, wherein the sensitive element (21b) has an actuated oscillator (211) configured to perform actuated oscillations along a first axis and a sensing oscillator (212) configured to perform reactional oscillations along a second axis different from the first axis in response to an angular rate (Ω₀) to be detected, and
wherein the signal processing unit (22b, 22c) is configured to output the signal based on demodulation of the reactional oscillations using the actuated oscillations.

5. The inertial sensor unit (1, 1b) according to at least one of the previous claims, wherein the inertial sensor (2, 2b) is a closed-loop inertial sensor having a sensor actuator (23, 232) for actuating the sensitive element (21, 21b).

6. The inertial sensor unit (1, 1b) according to claim 5, wherein the sensor actuator (23, 232) is configured to actuate the sensitive element (21, 21b) based on the virtual inertial quantity (a*, Ω*) input by the virtual inertial quantity input unit (3, 3b).

7. The inertial sensor unit (1a, 1c) according to at least one of claims 1 to 4, wherein the inertial sensor (2a, 2c) is an open-loop inertial sensor.

8. The inertial sensor unit (1a, 1c) according to claim 7, further comprising a virtual model unit (4, 4c) having a virtual model of the sensitive element (21, 21b) and being configured to output a virtual sensed quantity based on the virtual inertial quantity (a*, Ω *) input by the virtual inertial quantity input unit (3, 3c).

9. The inertial sensor unit (1a, 1c) according to claim 8, wherein the virtual model unit (4, 4c) is provided in parallel to the sensitive element (21, 21b).

10. Inertial sensor (2, 2a, 2b, 2c) for an inertial sensor unit (1, 1a, 1b, 1c) according to at least one of the previous claims having a virtual inertial quantity receiving unit (24, 24b, 24c) for receiving a virtual inertial quantity (a*, Ω*).

11. Method of operating an inertial sensor unit (1, 1a, 1b, 1c) according to at least one of claims 1 to 9, wherein
the inertial sensor (2, 2a, 2b, 2c) is stationary.

12. Test method for testing proper operation of an inertial sensor (2, 2a, 2b, 2c) comprising:
operating the inertial sensor unit (1, 1a, 1b, 1c) according to at least one of claims 1 to 9 with a predetermined virtual inertial quantity, wherein
proper operation of an inertial sensor (2, 2a, 2b, 2c) is determined based on a comparison of the signal (a, Ω) output by the inertial sensor unit (1, 1a, 1b, 1c) and a predetermined output for the predetermined virtual inertial quantity.

13. Controller configured to perform the test method according to claim 12.

14. Hardware-in-the-loop test system, comprising:
the inertial sensor unit (1, 1a, 1b, 1c) according to at least one of claims 1 to 9; and
a navigation device being configured to receive the signal output by the inertial sensor unit (1, 1a, 1b, 1c).

15. Movable vehicle, in particular an aerial vehicle, a road vehicle or a railway vehicle, comprising:
the inertial sensor (2, 2a, 2b, 2c) according to claim 10, preferably, the inertial sensor unit (1, 1a, 1b, 1c) according to at least one of claims 1 to 9, more preferably the hardware-in-the-loop test system according to claim 14.
